Europäisches Patentamt

European Patent Office

Office européen des brevets

(11) Veröffentlichungsnummer: **0 209 818**
B1

(12) # EUROPÄISCHE PATENTSCHRIFT

(45) Veröffentlichungstag der Patentschrift:
08.11.89

(51) Int. Cl.⁴: **A 23 G 3/02**, A 23 G 3/04

(21) Anmeldenummer: **86109573.5**

(22) Anmeldetag: **12.07.86**

(54) Verfahren zum Herstellen von Gummisüsswaren.

(30) Priorität: 24.07.85 DE 3526376

(43) Veröffentlichungstag der Anmeldung:
28.01.87 Patentblatt 87/5

(45) Bekanntmachung des Hinweises auf die Patenterteilung:
08.11.89 Patentblatt 89/45

(84) Benannte Vertragsstaaten:
AT BE CH DE FR GB IT LI LU NL SE

(56) Entgegenhaltungen:
BE-A- 715 793
CH-A- 149 681
CH-A- 656 290
DE-B- 3 417 196
FR-A- 618 575
FR-A- 2 228 436
FR-A- 2 297 574
GB-A- 746 644
SU-A- 171 728
US-A- 2 166 568
US-A- 2 679 866
US-A- 2 847 311
US-A- 4 271 206
US-A- 4 273 793
US-A- 4 567 055

CONFECTIONERY PRODUCTION, Band 42, Nr. 1, Januar 1976, Seiten 34-38; "Extrusion process for aerated sweets"

(73) Patentinhaber: Deutsche Gelatine-Fabriken Stoess & Co.GmbH, Postfach 100 Gammelsbacher Strasse 2, D-6930 Eberbach (DE)

(72) Erfinder: Bräumer, Klaus, Dr., Allensteiner Strasse 6, D-6930 Eberbach (DE)

(74) Vertreter: Hoeger, Stellrecht & Partner, Uhlandstrasse 14 c, D-7000 Stuttgart 1 (DE)

## Beschreibung

Die Erfindung betrifft ein Verfahren zum Herstellen von Gummi-Süßwaren nach dem Oberbegriff des Patentanspruchs 1.

Derartige Verfahren sind bekannt aus DE-B-3 417 196, US-A-4 273 793 oder US-A-4 271 206. Die gelatinehaltige Grundmasse enthält bei den bekannten Verfahren einen erheblichen Anteil an Wasser, der eine Trocknung des gespritzten Endprodukts erforderlich macht. Aus US-A-2 847 311 ist es zwar bekannt, einer gelatinehaltigen Grundmasse nur soviel Wasser zuzufügen, wie es dem Endwassergehalt des Fertigprodukts (marshmallows) entspricht, jedoch kann die Grundmasse in diesem Fall nicht in Spritzgußformen eingespritzt, sondern lediglich zu einem Strang ausgepreßt werden, der dann in kleine Fertigprodukte unterteilt wird.

Es ist Aufgabe der Erfindung, das gattungsgemäße Verfahren so zu verbessern, daß man einerseits in einfacher Weise eine leicht spritzgußfähige Grundmasse erhält, die andererseits aufgrund ihres geringen Wassergehalts nach dem Spritzgießen des gewünschten Fertigprodukts keine Trocknung mehr erfordert.

Die Aufgabe wird erfindungsgemäß durch die kennzeichnenden Merkmale des Patentanspruchs 1 gelöst.

Die nachstehende Beschreibung verschiedener Ausführungsformen der Erfindung dient im Zusammenhang mit beiliegender Zeichnung, die schematisch eine Spritzgießmaschine zeigt, der weiteren Erläuterung der Erfindung.

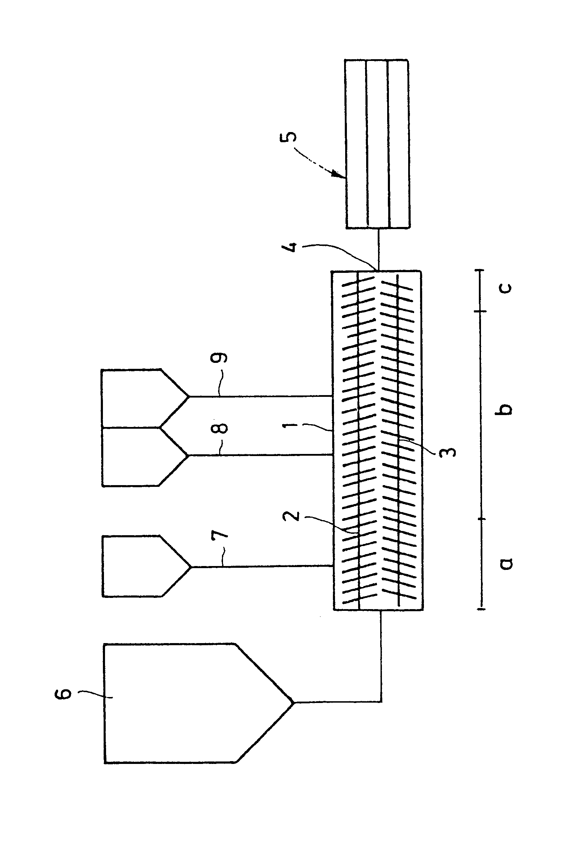

Auf der Zeichnung ist schematisch ein an sich bekannter Doppelschnecken-Extruder dargestellt, der in einem Gehäuse 1 zwei angetriebene, gegenläufig rotierende Schnecken 2, 3 aufweist. Der Extruder weist an seinem rechten Ende eine Extrusionsöffnung 4 auf, aus welcher die zu extrudierende, aufgeschlossene Grundmasse unmittelbar in eine Spritzgußform 5 eingespritzt wird. Die Spritzgußform 5 kann mehrlagig ausgebildet sein und in jeder Lage zahlreiche Einzelformen für die herzustellende Gummisüßware, z.B. Gummibonbons, enthalten. In einem Vorgefäß 6 ist zur Zubereitung der Grundmasse eine Rohmasse enthalten, beispielsweise ein Gemisch aus Wasser, vorgequollenem Gelatine-Granulat und Zucker. Über Dosierleitungen 7, 8 und 9 können wäßrige Gelatinelösungen oder Zusatzstoffe, beispielsweise Farbstoffe, Aromastoffe, Genußsäuren, oder dergleichen an der gewünschten Stelle in den Extruder eingegeben werden. Diese Zusatzstoffe können gegebenenfalls auch bereits der Rohmasse im Vorgefäß 6 zugegeben werden.

Die Rohmasse im Vorgefäß 6 ist verhältnismäßig zäh und enthält nur so viel Wasser, daß sie unter Druck aus dem Vorgefäß in den Extruder überführt werden kann. Im Extruder gelangt die Rohmasse in den Einflußbereich der beiden Schnecken 2, 3 und wird von diesen unter Ausübung von Druck durchgeknetet und in Richtung zur Extrusionsöffnung 4 bewegt. Die im Extruder ausgeübten Drücke können zwischen 10 und 150 bar, vorzugsweise zwischen 20 und 100 bar liegen.

Zur Zubereitung der Grundmasse ist der Extruder bereichsweise aufheizbar oder auch kühlbar, beispielsweise im Bereich a auf eine erste, im Bereich b auf eine zweite Temperatur. Im Bereich c, also unmittelbar vor der Spritzöffnung 4, kann der Extruder und damit die Grundmasse auf die gewünschte Extrusionstemperatur abgekühlt werden. Die Aufheizung der Grundmasse erfolgt auf Temperaturen zwischen 60 und 130, insbesondere 80 bis 100°C. Durch die Temperaturführung wird es so ermöglicht, die Rohmasse aufzuschließen, d.h. die Feststoffanteile z.B. Saccharose aufzulösen. Das Spritzgießwerkzeug (Spritzöffnung 4) wird gekühlt, um ein schnelles Abbinden der gespritzten Masse und damit einen großen Produktdurchsatz zu erzielen. Die in der Rohmasse enthaltenen Luftblasen sind über Entgasungszonen, die an der Spritzgießmaschine angebracht sind, entfernbar und erlauben die Herstellung luftblasenfreier, klarer Gelatine-Gummibonbons.

Die in den Extruder eingebrachte Rohmasse enthält die Gelatine in Form eines in Wasser vorgequollenen Granulats. Es wurde gefunden, daß sich dieses Granulat mit den weiteren Grundmassenbestandteilen im Extruder, insbesondere durch eine Schnecke, hervorragend weiterbearbeiten läßt. Die Rohmasse kann auch ein gemischtes Zucker-Gelatine-Granulat enthalten, welches sich ebenfalls im Extruder zu einer extrudierfähigen, klaren Grundmasse aufschließen läßt.

Schließlich kann die Rohmasse auch feingemahlene, kaltquellende Gelatine («Instant-Gelatine») enthalten.

Auf diese Weise lassen sich durch Spritzguß rasch und einfach, insbesondere ohne besondere Nachbehandlung, Gummisüßwaren in Form auch relativ komplizierter Vollkörper herstellen.

Diese Vollkörper können auch gefüllt sein, was sich in einfacher Weise durch eine Spritzgußform mit mehreren Anspritzpunkten (Koextrusion) ergibt, wobei die Grundmasse die Füllmasse umschließt. Die Füllmasse kann Vitamine, Fruchtzubereitungen und/oder Proteine enthalten. Bei einer anderen Ausführungsform der Erfindung wird die Grundmasse direkt mit bestimmten Nährstoffen angereichert, beispielsweise mit Eiweißen.

Die Spritzgußformen 5 können zum leichteren Entfernen der gespritzten Gummisüßwaren aus der Form vorher mit Trennwachs besprüht werden. Auch können Formen aus Werkstoffen, beispielsweise Teflon, verwendet werden, an denen die Grundmasse nicht haftet, so daß sie nach dem endgültigen Abkühlen ohne Schwierigkeiten aus der geöffneten Spritzgußform entnommen werden kann. Auch die fertigen Süßwarenformkörper können nochmals separat mit Trennwachs beölt werden, beispielsweise in herkömmlichen Beölungstrommeln.

Der Hauptvorteil des erfindungsgemäßen Verfahrens liegt darin, daß zum einen Aufschluß (Zubereitung) der Grundmasse und deren Formgebung in einer einzigen Vorrichtung verhältnismäßig einfachen Aufbaus erfolgen können, und zum anderen die mit herkömmlichen Kochanlagen aufbereitete Grundmasse wesentlich rationeller geformt werden kann.

Wesentlich ist, daß die Grundmasse der Süßware direkt mit dem gewünschten Endwassergehalt produziert werden kann und nicht mehr getrocknet zu werden braucht. Hieraus resultiert eine erhebliche Energiekosteneinsparung sowie ein geringerer Platzbedarf für die Produktion insgesamt, da keine (klimatisierten) Trocknungsräume benötigt werden.

Die Gummibonbons werden nach dem Formgebungsprozeß (Spritzen) mit pflanzlichen Fetten oder Ölen eingewachst, um das gegenseitige Ankleben zu unterdrücken und den Produkten Glanz zu verleihen.

### Patenansprüche

1. Verfahren zum Herstellen von Gummi-Süßwaren aus einer Zucker-Gelatine-Grundmasse, bei dem die Zucker-Gelatine-Grundmasse, gegebenenfalls unter Zugabe von Zusatzstoffen, wie Farbstoffen, Aromen, Genußsäuren oder dergleichen in einem Extruder zubereitet und hierauf aus dem Extruder in eine Spritzgußform eingespritzt wird, dadurch gekennzeichnet, daß zur Zubereitung der Grundmasse eine Rohmasse in den Extruder eingebracht wird, die Gelatine in Form eines in Wasser vorgequollenen Granulats enthält und einen Wassergehalt hat, welcher dem gewünschten Endwassergehalt der Gummi-Süßware entspricht.

2. Verfahren nach Anspruch 1, dadurch gekennzeichnet, daß die Rohmasse ein gemischtes Zucker-Gelatine-Granulat enthält.

3. Verfahren nach Anspruch 1, dadurch gekennzeichnet, daß die Grundmasse im Extruder unter erhöhtem Druck zubereitet wird.

4. Verfahren nach Anspruch 1, dadurch gekennzeichnet, daß die Grundmasse im Extruder bei erhöhter Temperatur zubereitet wird.

### Claims

1. Process for manufacturing gum confectionery from a sugar-gelatine basic mass, wherein the sugar-gelatine basic mass is prepared in an extruder, optionally with the addition of additive substances such as colourings, flavourings, culinary acids, or the like, and subsequently is injected out of the extruder into an injection casting mould, characterised in that for preparing the basic mass, there is introduced into the extruder a raw mass which contains gelatine in the form of a granulate which has been pre-soaked in water, and which has a water content which corresponds to the desired final water content of the gum confectionery.

2. Process according to claim 1, characterised in that the raw mass contains a mixed sugar-gelatine granulate.

3. Process according to claim 1, characterised in that the basic mass is prepared in the extruder under increased pressure.

4. Process according to claim 1, characterised in that the basic mass is prepared in the extruder at increased temperature.

### Revendications

1. Procédé de fabrication d'une gomme de confiserie à partir d'une pâte de base sucre-gélatine, selon lequel la pâte de base sucre-gélatine est préparée, éventuellement avec adjonction de substances supplémentaires comme des colorants, des aromatisants, des acidulants ou des substances similaires, dans une extrudeuse et à la sortie de l'extrudeuse est injectée dans un moule de moulage par injection, caractérisé en ce que pour la préparation de la pâte de base on introduit dans l'extrudeuse une matière brute qui contient de la gélatine sous la forme de granulats préimbibés d'eau et qui a une teneur en eau qui correspond à la teneur en eau finale souhaitée de la gomme de confiserie.

2. Procédé selon la revendication 1, caractérisé en ce que la matière brute contient un mélange granulats-sucre-gélatine.

3. Procédé selon la revendication 1, caractérisé en ce que la pâte de base est préparée dans l'extrudeuse sous pression élevée.

4. Procédé selon la revendication 1, caractérisé en ce que la pâte de base est préparée dans l'extrudeuse à une température élevée.

EP 0 209 818 B1